# EUROPÄISCHE PATENTSCHRIFT

(11) **EP 0 306 858 B1**
(45) Veröffentlichungstag und Bekanntmachung des Hinweises auf die Patenterteilung: **23.02.1994**
(21) Anmeldenummer: 88114385.3
(22) Anmeldetag: 02.09.1988
(51) Int. Cl.: B65D 1/48, B65D 25/02, B29C 51/12

(54) **Stapelbares Tray sowie Verfahren zu dessen Herstellung**
Stackable tray and method for its manufacture
Plateau empilable ainsi qu'un procédé pour sa fabrication

(30) Priorität: 08.09.1987 DE 3730130
(43) Veröffentlichungstag der Anmeldung: 15.03.1989
(73) Patentinhaber: Zarges, Frank W., Dipl.-Ing., D-82319 Starnberg (DE)
(72) Erfinder: Zarges, Frank W., Dipl.-Ing., D-82319 Starnberg (DE)
(74) Vertreter: Säger, Manfred, Dipl.-Ing.

(56) Entgegenhaltungen:
- BE-A- 560 549
- DE-A- 2 110 617
- DE-A- 3 827 207

## Beschreibung

Die Erfindung betrifft ein nestend stapelbares Konstruktionsteil sowie ein Verfahren zu dessen Herstellung.

Es sind für die geordnete Werkstückablage, die für die Roboterbestückung bzw. -entnahme eine hohe Wiederholgenauigkeit erfordert, im Leerzustand nestend stapelbare Kunststofftrays, vorzugsweise mit tiefgezogenem Nutzen für leichte Werkstücke und Werkzeuge sowie Metalltrays mit mechanisch bearbeitetem Nutzen für schwere Werkstücke und Werkzeuge bekannt.

Es ist ein Konstruktionsteil aus Kunststoff bekannt (BE-A-560 549), das für Werbezwecke, Sanitärartikel oder Automobilelemententeile gedacht ist. Es ist mit metallischen Verstärkungselementen versehen, die von dem Kunststoff teilweise eingehüllt werden. Eine Verwendung solcher Teile als Tray ist nicht vorgesehen.

Ferner ist ein Container bzw. Fertigungsmaterial für Container bekannt (DE-A-21 10 617), bestehend aus einer Kunststoffplatte 20, in der mehrere lineare gewellte Teile 22 ausgebildet sind und die mehrere langgestreckte Versteifungsglieder 16 aufweist, die im wesentlichen parallel zu den gewellten Teilen verlaufen und die in die Kunststoffplatte eingebettet sind, um dieser Festigkeit und Steifigkeit zu verleihen. Die Versteifungsglieder 16 können aus Profilen bestehen, beispielsweise T-Profilen. Eine Verwendung als Tray ist nicht vorgesehen.

Kunststofftrays sind zwar preiswert herstellbar, sind aber nur für Gegenstände mit relativ leichtem Gewicht einsetzbar sowie ungenau in der Positionierung. Metalltrays können demgegenüber zwar Gegenstände mit größerem Gewicht aufnehmen, sind aber teuer, da aufwendig herstellbar.

Der Erfindung liegt die Aufgabe zugrunde, ein Verfahren zur Herstellung eines Trays sowie dieses aus Kunststoff preisgünstig so auszuführen, daß damit zugleich eine genaue Positionierung möglich ist, als auch Werkstücke und Werkzeuge mit größerem Gewicht aufgenommen werden können.

Diese Aufgabe wird durch den Gegenstand des Vorrichtungs- sowie Verfahrens-Hauptanspruchs gelöst.

Dieses Tray gemäß der Erfindung weist leistenförmige Profile auf, die vorzugsweise aus Aluminium oder einem anderen leicht zu bearbeitenden Werkstoff bestehen können und die mit Aufnahmeschlitzen, -schnitten, -prismen oder dergleichen für die Werkstücke oder Werkstückträger ausgebildet sein können. Dieses erfindungsgemäß ausgebildete Tray wird in einen herkömmlichen Außenbehälter positionsgenau eingesetzt.

Da mehrere Profile auf der Innenseite des als Nutzen ausgebildeten Bodens angebracht sind, können diese einzeln oder in Gruppen in vergleichsweise großen Stückzahlen kostengünstig mechanisch bearbeitet werden, da sie nach optimalen Bearbeitungsgesichtspunkten in die Maschine eingespannt werden können und nicht entsprechend der späteren Werkstücklage bearbeitet werden müssen. Diese Profile sind vorzugsweise in Längsrichtung des Innentrays angeordnet und versteifen dieses auf diese Weise optimal.

Zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1: ein als Innentray ausgebildetes Tray in perspektivischer Darstellung,
- Figur 2: eine erste Ausführungsform für ein leistenförmiges Profil auf dem Boden des Innentrays gemäß Figur 1, in teilweise abgebrochenem, schematischem Querschnitt;
- Figur 3: eine zweite Ausführungsform eines Profils, in teilweise abgebrochenem, schematischem Querschnitt;
- Figur 4: eine dritte Ausführungsform eines Profils, in teilweise abgebrochenem, schematischem Querschnitt;
- Figur 5: eine vierte Ausführungsform eines Profils, in teilweise abgebrochenem schematischem Querschnitt;
- Figur 6: einen Schnitt durch ein Loch des Profils oder einer Schutzplatte, in schematischer abgebrochener Darstellung,
- Figur 7: eine zweite Ausführungsform eines Profils mit einem Loch, in teilweise abgebrochenem, schematischem Querschnitt, und
- Figur 8: das Profil und die Kunststoffolie, im in ein Werkzeug eingesetzten Zustand.

Das insgesamt mit 10 bezeichnete Innentray ist im Leerzustand nestend stapelbar und besteht aus einem tiefziehbaren Kunststoff. Es weist einen waagerechten, nach außen abstehenden oberen Rand 11 mit einer Erhöhung 12 auf, deren Unterseite auf den oberen Rand eines - nicht gezeigten - Außenbehälters aufgesetzt werden kann.

Der als Nutzen ausgebildete Boden 13 schließt sich an den waagerechten Rand 11 mittels eines konischen Zwischenbereiches 14 an. Auf der Innenseite des Bodens 13 sind zumindest zwei leistenförmige Profile 15 angeordnet, die zueinander parallel sowie in Längsrichtung 16 des Innentrays sowie mit Abstand zum seitlichen Rand des Bodens verlaufen.

Ferner ist die Innenseite des seitlichen Randes des Bodens 13 mit einer Schutzplatte 17 versehen, die eine Vielzahl von Löchern 18 aufweist.

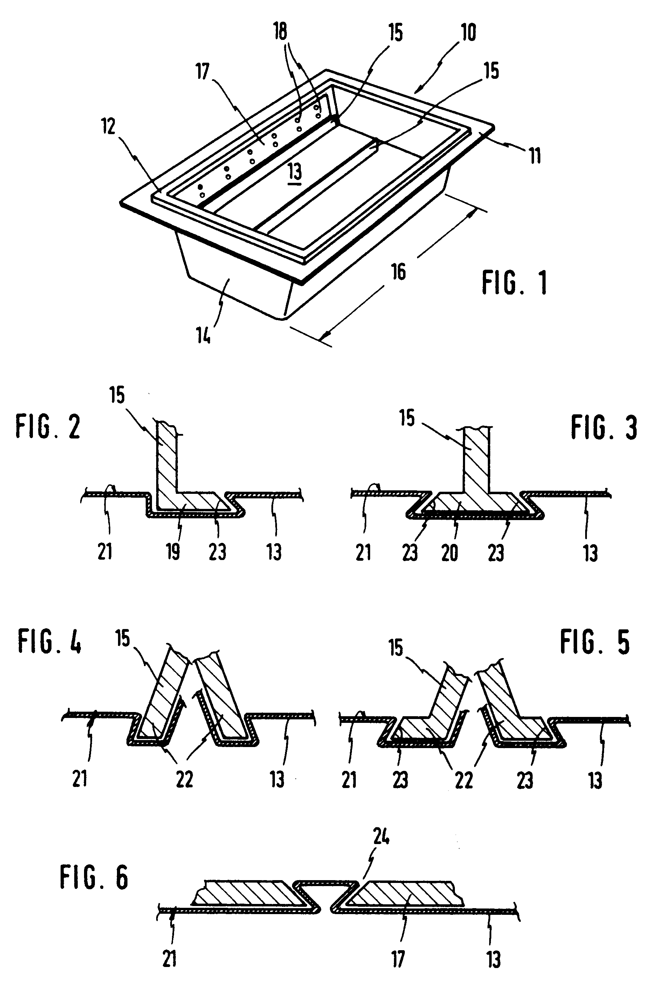

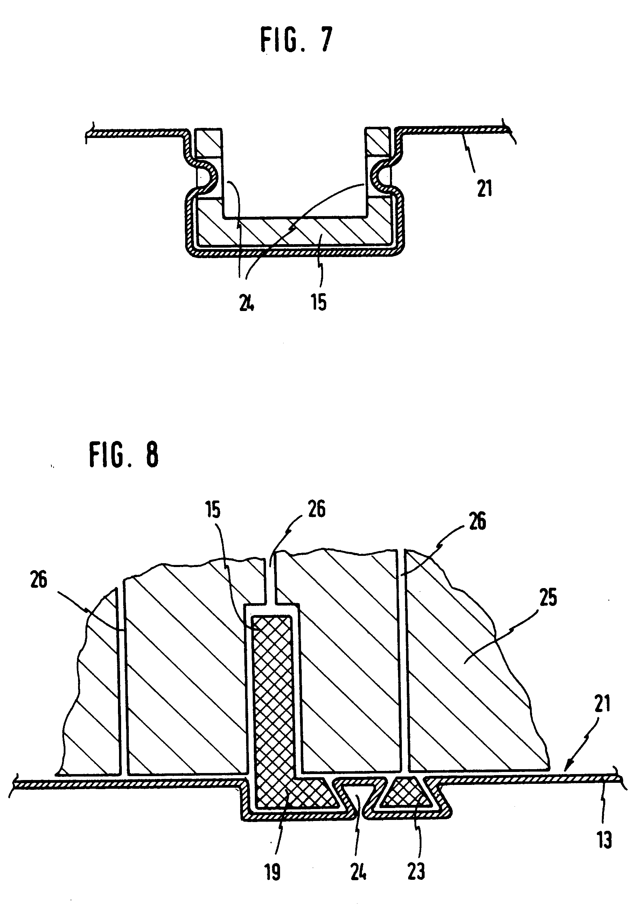

Das leistenförmige Profil 15 kann verschieden ausgestaltet sein, wie in den Figuren 2 bis 5 dargestellt. Es kann L- (Fig. 2) oder T-förmig (Fig. 3) ausgebildet sein, wobei der L-Balken 19 oder der T-Balken 20 der Innenseite 21 des Bodens anliegen. Die Profile können auch im Querschnitt V-förmig (Fig. 4) ausgebildet sein, deren beide V-Enden 22 ebenfalls an der Innenseite 21 des Bodens 13 aufliegen. Die beiden V-Enden können aber nach außen abgebogen sein (Fig. 5). Das Profil kann auch U-förmig ausgebildet sein, und die beiden U-Schenkel mit Löchern 24 versehen sein (Fig. 7).

Alle auf dem Innenboden 13 des Innentrays 10 aufliegenden Seitenkanten der Profile 13 weisen eine Fase 23 auf, deren Normale von der Innenseite 21 des Bodens 13 wegweist.

Die Schutzplatte 17 kann, wie in Fig. 6 dargestellt, ebenso wie die T- oder L-Balken 19, 20 mit einer Vielzahl von Löchern 24 versehen sein, deren Durchmesser sich in Richtung auf die Innenseite 21 des Bodens 13 des Innentrays 10 konisch verkleinern.

Figur 7 zeigt ein Profil gemäß Fig. 2, dessen L-Balken 19 noch zusätzlich mit einem Loch 24 versehen ist. Der L-Balken ist in ein insgesamt mit 25 bezeichnetes Werkzeug eingesetzt,welches mit Evakuierungskanälen 26 versehen ist. Der Boden 13 des Innentrays ist hierbei als tiefziehbare Kunststoffolie an das Werkzeug 25 sowie den diesbezüglich vorspringenden L-Balken 19 angelegt und wird bis an die Fließgrenze erwärmt. Zugleich wird über die Evakuierungskanäle 26 der Raum zwischen dem Werkzeug 25 und der Kunststoffolie evakuiert, so daß sich diese fest an das Werkzeug und um den L-Balken 25 des Profils 15 sowie dessen Fase 23 herumlegt. In gleicher Weise wird das Loch 24 von der Folie pilzartig ausgefüllt, so daß der L-Balken 19 des Profils 15 von dem Boden 13 des Innentrays 10 fest umgriffen wird, wie es auch in den Figuren 2 und 3 sowie 5 und 6 dargestellt ist.

## Patentansprüche

1. Nestend stapelbares Konstruktionsteil mit einem Nutzen, der vorzugsweise aus Kunststoff besteht, wobei das Konstruktionsteil in Bereichen, die einer hohen Last-Beanspruchung ausgesetzt sind, mit einer Schutzplatte (17) versehen ist, die von dem Werkstoff des Konstruktionsteils zumindest teilweise formschlüssig umgriffen ist,
**dadurch gekennzeichnet,**
daß das Konstruktionsteil als Tray (10) ausgebildet ist mit zumindest einem auf der Außen- oder Innenseite (21) des Trays (10) von dessen Werkstoff zumindest teilweise formschlüssig umgriffenen leistenförmigen Profil (15), und
die Profile (15) und/oder die Schutzplatte (17) Löcher (24) aufweisen, deren Ränder von dem Werkstoff des Trays durchsetzt sind, wobei die Löcher (24) Hinterschneidungen aufweisen.

2. Tray nach Anspruch 1, dadurch gekennzeichnet, daß die Profile (15) zur Aufnahme von Werkstücken oder Werkstückträgern ausgebildet sind, wobei die Profile (15) in Längsrichtung des Trays (10) verlaufen oder parallel, winklig zueinander oder sich kreuzend angeordnet sind und wobei die äußeren Profile (15) vorzugsweise mit Abstand zum seitlichen Rand des Bodens (13) angeordnet sind.

3. Tray nach einem der Ansprüche 1 bis 2, dadurch gekennzeichnet, daß einzelne Profile (15) und/oder die Schutzplatte (17) in Längsrichtung verschieblich angebracht oder die Profile (15) und/oder die Schutzplatte (17) in definierten Positionen rastend arretierbar sind.

4. Tray nach einem der Ansprüche 1 bis 3, dadurch gekennzeichnet, daß die an dem Tray (10) anliegenden Bereiche des Profiles (15) und/oder der Schutzplatte (17) zumindest bereichsweise Hinterschneidungen aufweisen, die von dem Werkstoff des Trays hintergriffen sind.

5. Tray nach Anspruch 1, dadurch gekennzeichnet, daß es als Innentray zum Einbau in Außenbehältern ausgestaltet ist.

6. Tray nach Ansprüchen 2 und 5, dadurch gekennzeichnet, daß es als Innentray ausgebildet ist und die Profile (15) im Rand-, vorzugsweise Eckbereich bis auf die Höhe der aufzunehmenden Werkstücke, gegebenenfalls über die Höhe des Randes des Außenbehälters hochgeführt ist.

7. Verfahren zur Herstellung eines Trays nach Anspruch 1, dadurch gekennzeichnet, daß die Profile (15) und/oder die Schutzplatte (17) in zueinander festgelegter Lage in einem Werkzeug (25) unter Freilassen der gegenüberliegenden Seite des Trays (10) gehalten werden, daß auf diese eine tiefziehbare Kunststoffolie (13) als Werkstoff aufgelegt wird, daß diese erwärmt und der Raum zwischen der Folie (13) und dem Werkzeug (25) evakuiert wird, so daß diese sich um die Hinterschneidung der dem Tray (10) zugewandten Seite des Profils (15) oder der Schutzplatte (17) herumlegt und gegebenenfalls die darin befindlichen Löcher (24) nach Art einer Aufpilzung unter Hintergreifen dieser Bereiche hineingezogen wird.

8. Verfahren zur Herstellung eines Trays nach Anspruch 1, dadurch gekennzeichnet, daß die Profile (15) und/oder die Schutzplatte (17) in zueinander festgelegter Lage in einem Werkzeug (25) unter Freilassen einer der beiden Seiten des Trays gehalten werden und daß die nicht-gehaltenen freien Bereiche von einem spritzbaren und/oder gießbaren Werkstoff und damit die Hinterscheidungen sowie die in den Profilen (15) und/oder in der Schutzplatte (17) befindlichen Löcher hintergriffen werden.

## Claims

1. A nestingly stackable structural member having a support portion which preferably comprises plastics material, wherein in regions which are exposed to a high load stress, the structural member is provided with a protective plate (17) which is at least partially positively lockingly embraced by the material of the structural member, characterised in that the structural member is in the form of a tray (10) with at least one bar-shaped profile portion (15) which on the outside or inside (21) of the tray (10) is at least partially positively lockingly embraced by the material thereof, and the profile portions (15) and/or the protective plate (17) have holes (24), through the edges of which passes the material of the tray, the holes (24) having undercut configurations.

2. A tray according to claim 1 characterised in that the profile portions (15) are of a configuration for receiving workpieces or workpiece carriers, wherein the profile portions (15) extend in the longitudinal direction of the tray (10) or are arranged in parallel or angular relationship with each other or in mutually intersecting relationship and wherein the outer profile portions (15) are preferably arranged at a spacing relative to the lateral edge of the bottom (13).

3. A tray according to one of claims 1 and 2 characterised in that individual profile portions (15) and/or the protective plate (17) are disposed displaceably in the longitudinal direction or the profile portions (15) and/or the protective plate (17) can be arrested latchingly in defined positions.

4. A tray according to one of claims 1 to 3 characterised in that the regions of the profile portion (15) and/or the protective plate (17), which bear against the tray (10), are provided at least in a region-wise manner with undercut configurations, behind which the material of the tray engages.

5. A tray according to claim 1 characterised in that it is in the form of an inner tray for fitting in outer containers.

6. A tray according to claims 1 and 5 characterised in that it is in the form of an inner tray and the profile portions (15) are extended upwardly in the edge and preferably the corner region to the height of the workpieces to be received, possibly above the height of the edge of the outer container.

7. A method of manufacturing a tray according to claim 1 characterised in that the profile portions (15) and/or the protective plate (17) are held in fixed relationship with each other in a tool (25), leaving the opposite side of the tray (10) free, that a deep-drawable plastics foil (13) is laid as material on said side, that said foil is heated and the space between the foil (13) and the tool (25) is evacuated so that it is laid around the undercut configuration of the side, which is towards the tray (10), of the profile portion (15) or the protective plate (17) and possibly drawn into the holes (24) therein in the manner of a mushroom configuration, engaging behind said regions.

8. A method of manufacturing a tray according to claim 1 characterised in that the profile portions (15) and/or the protective plate (17) are held in fixed relationship with each other in a tool (25), leaving one of the two sides of the tray free, and that the free regions which are not held have an injectable and/or pourable material engaging behind same and therewith the undercut configurations as well as the holes provided in the profile portions (15) and/or in the protective plate (17).

## Revendications

1. Elément de construction empilable par emboîtement comportant un flanc constitué, de préférence, en matière plastique, ledit élément étant muni dans les zones exposées à des charges élevées, d'une plaque de protection (17) qui est entourée, de manière à en épouser la forme, au moins partiellement par le matériau dudit élément de construction, caractérisé en ce que l'élément de construction est réalisé sous la forme d'un plateau (10) comportant au moins un profilé (15) en forme de baguette entouré, au moins partiellement, sur le côté extérieur ou le côté intérieur (21) du plateau (10), par le matériau de celui-ci, et en ce que les profilés (15) et/ou la plaque de protection (17) présentent des trous (24) dont les bords sont traversés par le matériau du plateau, lesdits trous (24) présentant des contre-dépouilles.

2. Plateau selon la revendication 1, caractérisé en ce que les profilés (15) sont réalisés pour recevoir des pièces à usiner ou des porte-pièces, lesdits profilés (15) s'étendant en direction longitudinale du plateau (10) ou étant disposés parallèlement, perpendiculairement ou de manière à se croiser mutuellement, les profilés extérieurs (15) étant disposés, de préférence, à une certaine distance du bord latéral du fond (13).

3. Plateau selon l'une des revendications 1 à 2, caractérisé en ce que certains profilés (15) et/ou la plaque de protection (17) sont fixés de manière à pouvoir coulisser dans le sens longitudinal ou en ce que les profilés (15) et/ou la plaque de protection (17) peuvent être bloqués par encliquetage dans des positions définies.

4. Plateau selon l'une des revendications 1 à 3, caractérisé en ce que les zones du profité (15) adjacentes au plateau (10) et/ou à la plaque de protection (17) présentent au moins, par endroits, des contre-dépouilles sur lesquelles s'applique le matériau du plateau.

5. Plateau selon la revendication 1, caractérisé en ce qu'il est réalisé sous la forme d'un plateau intérieur destiné à être monté dans des récipients extérieurs.

6. Plateau salon les revendications 2 et 5, caractérisé en ce qu'il est réalisé sous la forme d'un plateau intérieur et que les profilés (15), dans la zone des bords et, de préférence, des angles, remontent jusqu'au niveau des pièces à usiner à recevoir, éventuellement en dépassant le niveau du bord du récipient extérieur.

7. Procédé pour la fabrication d'un plateau selon la revendication 1, caractérisé en ce que les profilés (15) et/ou la plaque de protection (17) sont maintenus dans une position mutuellement définie dans un outil (25), le côté opposé du plateau (10) étant laissé libre, en ce que comme matériau un film de matière plastique (13) pouvant être moulé à chaud est posé dessus, en ce que ce film est chauffé et qu'un vide est créé dans l'espace compris entre ledit film (13) et l'outil (25), de telle sorte que ce film vient se poser autour de la contre-dépouille du côté orienté vers le plateau (10) du profilé (15) ou de la plaque de protection (17) et qu'il est éventuellement tiré dans les trous (24) qui y sont pratiqués, en formant des saillies en forme de champignons et en entourant ces zones.

8. Procédé pour la fabrication d'un plateau selon la revendication 1, caractérisé en ce que les profilés (15) et/ou la plaque de protection (17) sont maintenus dans une position définie, les uns par rapport à l'autre, dans un outil (25), en laissant libre l'un des deux côtés du plateau et, en ce que les zones libres et non maintenues reçoivent l'application d'un matériau par projection et/ou par coulée, et que de ce fait les contre-dépouilles, ainsi que les trous pratiqués dans les profilés (15) et dans la plaque de protection (17) sont également revêtus de ce matériau.
